# EUROPÄISCHE PATENTSCHRIFT

(11) **EP 4 442 430 B1**
(45) Veröffentlichungstag und Bekanntmachung des Hinweises auf die Patenterteilung: **28.01.2026**
(21) Anmeldenummer: 24168197.2
(22) Anmeldetag: 03.04.2024
(51) Int. Cl.: B29C 49/12, B29C 49/42, B29C 49/58, B29C 49/06, B29C 49/36, B29C 49/78, B29K 67/00, B29L 31/00

(54) **VORRICHTUNG UND VERFAHREN ZUM HERSTELLEN VON BEHÄLTERN AUS VORFORMLINGEN**
DEVICE AND METHOD FOR PRODUCING CONTAINERS FROM PREFORMS
DISPOSITIF ET PROCÉDÉ DE FABRICATION DE RÉCIPIENTS À PARTIR DE PRÉFORMES

(30) Priorität: 04.04.2023 DE 102023108573
(43) Veröffentlichungstag der Anmeldung: 09.10.2024
(73) Patentinhaber: KHS GmbH, 44143 Dortmund (DE)
(72) Erfinder: Baumgarte, Rolf, 44143 Dortmund (DE); Kiefer, Dr. Margit, 44143 Dortmund (DE)
(74) Vertreter: Eisenführ Speiser

(56) Entgegenhaltungen:
- EP-A1- 2 669 070
- EP-B2- 2 176 053
- WO-A1-2011/154326
- US-A1- 2013 153 809
- US-B2- 11 235 505

## Beschreibung

Die Erfindung betrifft eine Vorrichtung sowie ein Verfahren zum Herstellen von Behältern aus thermisch konditionierten Vorformlingen, insbesondere aus einem thermoplastischen Kunststoff, vorzugsweise aus PET. Ferner betrifft die Erfindung eine Streckblasmaschine. Bekannt ist die Herstellung von Behältern durch Blasformen aus Vorformlingen aus einem thermoplastischen Material, beispielsweise aus Vorformlingen aus PET (Polyethylenterephthalat), wobei die Vorformlinge innerhalb einer Blasmaschine unterschiedlichen Bearbeitungsstationen zugeführt werden. Typischerweise weist eine Blasmaschine eine Heizvorrichtung zum Temperieren bzw. zum thermischen Konditionieren der Vorformlinge sowie eine Blaseinrichtung mit wenigstens einer Blasstation auf, in deren Bereich der jeweils zuvor temperaturkonditionierte Vorformling zu einem Behälter expandiert wird. Die Expansion erfolgt mit Hilfe eines Druckgases (Druckluft) als Druckmedium, das mit einem Formdruck in den zu expandierenden Vorformling eingeleitet wird. Der verfahrenstechnische Ablauf bei einer derartigen Expansion des Vorformlings wird in der DE 43 40 291 A1 erläutert. Der grundsätzliche Aufbau einer Blasstation ist in der DE 42 12 583 A1 beschrieben. Möglichkeiten der Temperierung der Vorformlinge sind beispielsweise in der DE 23 52 926 A1 erläutert. Unter Temperierung oder thermischer Konditionierung wird dabei verstanden, dass der Vorformling auf eine für die Blasumformung geeignete Temperatur erwärmt und dem Vorformling gegebenenfalls ein Temperaturprofil in Längsrichtung und/oder in Umfangsrichtung und/oder in radialer Richtung aufgeprägt wird. Die Blasformung von Behältern aus Vorformlingen unter zusätzlicher Verwendung einer Reckstange ist ebenfalls bekannt.

Gemäß einem typischen Weiterverarbeitungsverfahren werden die durch Blasformen hergestellten Behälter einer nachfolgenden Fülleinrichtung zugeführt und hier mit dem vorgesehenen Produkt oder Füllgut gefüllt. Es werden also eine separate Blasmaschine und eine separate Füllmaschine verwendet. Bekannt ist es dabei auch, die separate Blasmaschine und die separate Füllmaschine zu einem Maschinenblock, d.h. zu einer verblockten Blas-Füll-Einrichtung zusammenzufassen, wobei weiterhin das Blasformen und das Füllen an gesonderten Maschinenkomponenten und zeitlich nacheinander erfolgen. Vor dem Füllen der Behälter mit dem vorgesehenen Produkt oder Füllgut kann außerdem eine Beschichtung auf der Behälterinnenseite mittels einer Beschichtungseinrichtung aufgetragen werden. Nach dem Füllen der Behälter können die Behälter in einer Etikettierstation mit Etiketten versehen werden.

Bei dem Umformprozess mittels einer Vorrichtung zum Herstellen von Behältern aus thermisch konditionierten Vorformlingen werden typischerweise verschiedene Druckstufen aufgebracht, beispielsweise zunächst ein Vorblasdruck, anschließend ein Zwischendruck und dann ein Hauptblasdruck. Darüber hinaus können auch weitere Druckstufen vorgesehen sein.

Typischerweise wird die Druckluft außerhalb der Reckstange, insbesondere am äußeren Umfang der Reckstange und parallel zur Reckstange, in Richtung des Vorformlings geführt. Es ist auch bekannt eine hohle Reckstange zu verwenden, wie beispielsweise in der DE 28 14 952 A1 beschrieben. Ein Anschluss für das unter Druck stehende Gas erfolgt hier über ein einer Reckstangenkuppe abgewandtes Ende der rohrartig ausgebildeten Reckstange. Eine Druckgaszuführung über das Ende einer hohlen Reckstange wird darüber hinaus in der DE 34 08 740 C2 beschrieben. Ferner ist aus der EP 1 660 302 B1 ein Verfahren zur Blasformung von Behältern bekannt, bei dem unter Druck stehendes Gas durch die Reckstange hindurch in den Behälter eingeleitet wird. Dabei wird das Druckgas zur Behälterformung aus einer Druckkammer heraus seitlich in einen Stangeninnenraum der Reckstange eingeleitet und dann in der Reckstange geführt bis zu Austrittsöffnungen. Das Druckgas wird über eine Mehrzahl von Durchgangsöffnungen in den Stangeninnenraum eingeleitet, wobei die Durchgangsöffnungen sowohl entlang eines Umfangs als auch in Richtung einer Längsachse der Reckstange verteilt sind.

Aus US 2013/153809 A1 ist ein Ventil für eine Maschine zum Aufblasen von Behältern bekannt, das einen hohlen Ventilkörper mit einer Achse, einen Deckel, mindestens zwei entlang der Achse in der Kammer bewegliche Hülsen, mindestens einen Einlass und einen Auslass sowie Steuermittel umfasst, die dazu ausgebildet sind, die Hülsen in der Kammer zu bewegen. Die Hülsen sind ineinander montiert und bilden einen Kanal für den Durchgang eines Blasgases.

Aus EP 2 669 070 A1 ist eine Hohlkörperherstellungsmaschine bekannt, umfassend mindestens eine Form, innerhalb derer Hohlkörper mittels Beaufschlagung durch ein unter Druck stehendes Medium herstellbar sind, mindestens eine Ventileinheit, welche mit der Form derart in Wirkverbindung steht, dass Medium zu einem sich in der Form befindenden, zu formenden Material von mindestens zwei Ventilen zu- bzw. ableitbar ist, wobei die Ventile mindestens eine Öffnung in Richtung des zu formenden Hohlkörpers aufweisen und mindestens eine Öffnung in Richtung eines Druckspeichers.

Aus EP 2 176 053 B2 ist Vorrichtung zur Blasformung von Behältern bekannt, die mindestens eine Blasstation mit einer Blasform aufweist, sowie bei der sich ein Strömungsweg für ein Blasgas zur Blasformung der Behälter durch ein Anschlusselement hindurch erstreckt, das einen Ventilträger aufweist, der mindestens ein Ventil haltert, wobei das Ventil einen Hauptkanal des Ventilträgers ringartig umgibt, wobei jeweils ein in einem Modulgehäuse angeordnetes Ventil ein Ventilmodul ausbildet, und wobei mindestens zwei Ventilmodule in einer Längsrichtung des Ventilkörpers übereinander angeordnet sind.

Aus WO 2011/154326 A1 ist ein proportionales Streckblasformsystem bekannt, umfassend einen Zylinder und einen Kolben, der innerhalb des Zylinders beweglich ist und den Zylinder in eine erste Kammer und eine zweite Kammer trennt. Das proportionale Streckblasformsystem umfasst auch ein proportionales Blasformventil. Das proportionale Blasformventil umfasst eine erste Öffnung, die zur Aufnahme eines unter Druck stehenden Gases ausgebildet ist, und eine zweite Öffnung, die in Fluidverbindung mit dem Zylinder und selektiv in Fluidverbindung mit der ersten Öffnung steht.

Aus US 11 235 505 B2 ist ein Verfahren zur Herstellung eines Flüssigkeitsbehälters bekannt, umfassend: einen Flüssigkeitsblasformschritt des Formens eines Vorformlings zu einem Flüssigkeitsbehälter; und einen Kopfraumbildungsschritt des Bildens eines Kopfraums durch Ausstoßen einer Flüssigkeit aus dem Flüssigkeitsbehälter durch eine Ausstoßöffnung in einem Zustand, in dem ein Flüssigkeitszufuhrpfad geschlossen ist, wobei der Ausstoß durch Ansaugen durch eine Flüssigkeitsansaugquelle erreicht wird.

Ein Problem bei bekannten Verfahren und Vorrichtungen zur Herstellung von Behältern aus thermisch konditionierten Vorformlingen besteht darin, dass ein hohes Volumen an Druckluft bereitgestellt werden muss und damit ein hoher Energieaufwand für das Aufbringen der Druckstufen - und somit auch für den gesamten Umformprozess - notwendig ist. Der relativ hohe Energiebedarf besteht somit unter anderem aufgrund eines hohen Druckluftverbrauchs beim Umformprozess.

Der Erfindung liegt daher die Aufgabe zugrunde, eine verbesserte Lösung bereitzustellen, welche die genannten Probleme adressiert. Insbesondere ist es Aufgabe der Erfindung, eine Lösung bereitzustellen, mittels derer eine energieeffizientere Herstellung von Behältern aus Vorformlingen ermöglicht wird, vorzugsweise bei gleichzeitiger Erhöhung der Produktionsgeschwindigkeit.

Gemäß einem ersten Aspekt der Erfindung wird die Aufgabe gelöst durch eine Vorrichtung nach Anspruch 1. Danach ist vorgesehen eine Vorrichtung zum Herstellen von Behältern aus thermisch konditionierten Vorformlingen, insbesondere aus einem thermoplastischen Kunststoff, vorzugsweise aus PET, die Vorrichtung umfassend eine Blasdüse zum Einblasen von Druckluft in einen Vorformling für eine Umformung des Vorformlings in einen Behälter, wobei die Blasdüse eine Blasdüsenöffnung aufweist, eine Reckstange zum Recken des Vorformlings, die sich entlang einer Längsachse durch die Blasdüse und zumindest teilweise innerhalb der Blasdüse erstreckt, und die für das Recken des Vorformlings relativ zur Blasdüsenöffnung axial bewegbar ist, einen Ventilblock mit mehreren Blasluftventilen, die entlang der Längsachse und innerhalb des Ventilblocks axial bewegbar sind und die mindestens abschnittsweise ringförmig ausgebildet sind, wobei mindestens zwei der Blasluftventile die Reckstange mindestens abschnittsweise ringförmig umgeben, wobei die mehreren Blasluftventile ein erstes Blasluftventil und ein zweites Blasluftventil umfassen, wobei das zweite Blasluftventil benachbart zum ersten Blasluftventil angeordnet ist, wobei zwischen dem ersten Blasluftventil und dem zweiten Blasluftventil eine Dichtfläche an mindestens einem dieser zwei Blasluftventile angeordnet ist, die beim aneinander Anliegen dieser zwei Blasluftventile einen Fluidströmungsweg für eine Fluidströmung, insbesondere für eine Gasströmung, der zwischen diesen zwei Blasluftventilen und zur Blasdüsenöffnung verläuft, mittels einer Dichtwirkung sperrt.

Erfindungsgemäß ist vorgesehen, dass das erste Blasluftventil in einer radialen Richtung, die orthogonal zur Längsachse verläuft, zumindest teilweise innerhalb des zweiten Blasluftventils angeordnet ist.

Es wird also vorgeschlagen, dass sich das erste Blasluftventil und das zweite Blasluftventil zumindest teilweise ringförmig umgeben. Insbesondere wird vorgeschlagen, dass das zweite Blasluftventil das erste Blasluftventil zumindest teilweise ringförmig umgibt. Das erste Blasluftventil ist demnach zumindest teilweise innerhalb des zweiten Blasluftventils angeordnet.

Mittels dieser Anordnung der Blasluftventile ineinander kann auf besonders vorteilhafte Weise erreicht werden, dass der Abstand zwischen den Blasluftventilen und dem Vorformling deutlich reduziert wird, da die Blasluftventile auf diese Weise im Wesentlichen auf einer Höhe und nah zum Vorformling angeordnet werden können.

Ein Vorteil einer solchen Vorrichtung liegt somit darin, dass das Totraumvolumen im Vergleich zu bekannten Vorrichtungen deutlich reduziert werden kann. Dadurch kann die Druckluft effizienter genutzt werden und eine energieeffizientere Produktion von Behältern ermöglicht werden. Es kann sogar ermöglicht werden, dass ein negatives Totraumvolumen erreicht wird.

Ein weiterer Vorteil liegt darin, dass ein Druckaufbau und ein Druckabbau schneller möglich sind, da das Volumen, in dem ein Druck aufgebaut wird, insgesamt kleiner ist als bei herkömmlichen Vorrichtungen. Dadurch kann der Prozess insgesamt beschleunigt und die Produktionsleistung erhöht werden.

Vorzugsweise sind das erste Blasluftventil und das zweite Blasluftventil bezogen auf die Längsachse zumindest abschnittsweise parallel, also auf der gleichen Höhe entlang der Längsachse, angeordnet. Dadurch können sowohl das erste als auch das zweite Blasluftventil auf besonders vorteilhafte Weise unmittelbar oberhalb der Öffnung des Vorformlings angeordnet werden, wodurch das Totraumvolumen reduziert werden kann. Es ist auch möglich, dass das erste Blasluftventil und das zweite Blasluftventil bezogen auf die Längsachse nur in einem Abschnitt auf der gleichen Höhe angeordnet sind und in einem Abschnitt nicht auf gleicher Höhe angeordnet sind.

Die Blasdüse ist vorzugsweise ausgebildet, um Druckluft in einen Vorformling für eine Umformung des Vorformlings in einen Behälter einzublasen und/oder um Druckluft aus einem aus dem Vorformling entstandenen Behälter abzuführen. So kann über die Blasdüsenöffnung der Blasdüse Druckluft in den Vorformling eingeblasen werden, damit der Vorformling in einen Behälter umgeformt wird, und/oder Druckluft aus einem hergestellten Behälter abgeführt werden, damit der hergestellte Behälter druckentlastet wird und/oder für den Umformprozess nicht mehr benötigte Druckluft zurückgewonnen werden kann.

Die Blasdüse weist vorzugsweise eine an der Blasdüsenöffnung angeordnete Blasdüsendichtung zum Anlegen der Blasdüsenöffnung an einen Vorformling auf. Mittels einer solchen Blasdüsendichtung kann ein fluiddichtes Anliegen zwischen Blasdüsenöffnung und Vorformling erreicht werden, sodass Druckluft ohne Druckluftverluste an die Umgebung von der Blasdüsenöffnung in den Vorformling und/oder von dem Vorformling zur Blasdüsenöffnung strömen kann.

Die Vorrichtung weist vorzugsweise eine Blasform auf, umfassend zwei Blasformhälften, wobei die Blasform zwischen einem geschlossenen Zustand und einem geöffneten Zustand verstellbar ist, wobei die Blasform im geschlossenen Zustand eine Umformkavität zum Umformen des Vorformlings in einen Behälter aufweist. Die Blasform kann optional auch ein Bodenteil aufweisen, das bevorzugt bewegbar ist und zusammen mit den Blasformhälften eine Umformkavität ausbilden kann.

Die Reckstange erstreckt sich entlang der Längsachse und insbesondere durch die Blasdüse hindurch. Die Reckstange kann einen runden Querschnitt aufweisen und rotationssymmetrisch um die Längsachse ausgebildet sein. Die Reckstange erstreckt sich bevorzugt innerhalb des Ventilblocks und vorzugsweise durch die Blasluftventile hindurch, insbesondere innerhalb der Blasluftventile.

Die Reckstange kann vorzugsweise relativ zur Blasdüse entlang der Längsachse bewegt werden und insbesondere in Richtung des Vorformlings bewegt werden, um den Vorformling zu recken. Die Reckstange kann dabei insbesondere entlang der Längsachse entlang eines Reckweges bewegt werden. Unter einem Reckweg ist dabei der Weg der Reckstange zu verstehen, auf dem die Reckstange eine Reckkraft und/oder eine führende Kraft auf den Vorformling ausübt. Dies ist gleichsetzbar mit dem Weg der Reckstange, der mit dem erstmaligen Anliegen einer Reckstangenspitze der Reckstange an dem Boden des Vorformlings beginnt und mit dem Erreichen einer Endposition endet, wobei in dieser Endposition in der Regel der Boden des vollständig gereckten Vorformlings zwischen Reckstangenspitze und umgebender Form eingeklemmt ist. Der Reckweg beschreibt somit den Weg, den die Reckstange beim Recken und/oder Führen des Vorformlings zurücklegt, beginnend mit dem ersten Kontakt zwischen Reckstangenspitze und Vorformling.

Die mehreren Blasluftventile sind entlang der Längsachse und innerhalb des Ventilblocks axial bewegbar. Die mehreren Blasluftventile sind vorzugsweise ringförmig ausgebildet und bevorzugt zumindest abschnittsweise ineinander angeordnet. Die Blasluftventile sind insbesondere sich ringförmig umgebend angeordnet. Eine solche ringförmige Ausbildung ist insbesondere für die Herstellbarkeit der Blasluftventile und der mit den Blasluftluftventilen zusammenwirkenden Bauteilen vorteilhaft. Die mehreren Blasluftventile können aber auch einen Querschnitt aufweisen, der keinen kompletten Kreisring bildet, sondern nur einen Teil eines Kreisrings. Die mehreren Blasluftventile können sich somit auch entlang eines Kreisbogens mit einem Mittelpunktswinkel von unter 360° erstrecken, sodass sich beispielsweise auch Blasluftventile entlang eines Kreises erstrecken können.

Das zweite Blasluftventil ist benachbart zum ersten Blasluftventil angeordnet. Zwischen dem ersten Blasluftventil und dem zweiten Blasluftventil ist vorzugsweise kein weiteres Blasluftventil angeordnet. Weitere Blasluftventile können aber vorhanden sein. So kann beispielsweise ein Blasluftventil benachbart zum zweiten Blasluftventil, und insbesondere das zweite Blasluftventil ringförmig umgebend, angeordnet sein.

Zwischen dem ersten Blasluftventil und dem zweiten Blasluftventil ist eine Dichtfläche an mindestens einem dieser zwei Blasluftventile angeordnet. Es kann eine Dichtfläche an dem ersten Blasluftventil und/oder an dem zweiten Blasluftventil angeordnet sein. Mit der Dichtfläche wird insbesondere ein Ventilsitz ausgebildet, wobei vorzugsweise mittels eines der zwei Blasluftventile das andere der zwei Blasluftventile geführt werden kann, um dann mittels der Dichtfläche eine Dichtwirkung zwischen den zwei Blasluftventilen zu bewirken. Beim aneinander Anliegen dieser zwei Blasluftventile wird dann der Fluidströmungsweg, der zwischen diesen zwei Blasluftventilen in Richtung der Blasdüsenöffnung verläuft, mittels einer Dichtwirkung gesperrt.

Die Begriffe Fluidströmungsweg und Strömungsweg werden hier und im Folgenden synonym verwendet. Unter einem Strömungsweg ist demnach vorzugsweise ein Gasströmungsweg, insbesondere für eine Druckluftströmung, zu verstehen.

Die Dichtfläche ist vorzugsweise radial innen am zweiten Blasluftventil und/oder radial außen am ersten Blasluftventil ausgebildet. Dadurch lassen sich da erste Blasluftventil und das zweite Blasluftventil besonders vorteilhaft ineinander und im Wesentlichen auf gleicher Höhe anordnen. Es ist allerdings auch möglich, dass die Dichtfläche an einer anderen Position des ersten und/oder des zweiten Blasluftventils angeordnet ist.

Vorzugsweise beherrschen die Blasluftventile jeweils einen Strömungsweg in den Vorformling hinein. Beim Anliegen der Blasluftventile aneinander wird der jeweilige Strömungsweg, der von den Blasluftventilen jeweils beherrscht wird, gesperrt. Wenn die Blasluftventile derart bewegt werden, dass sie nicht aneinander anliegen, wird der Strömungsweg freigegeben, sodass Druckluft durch den Strömungsweg geleitet werden kann.

Es ist besonders bevorzugt, dass die mehreren Blasluftventile ein drittes Blasluftventil umfassen, das benachbart zum zweiten Blasluftventil angeordnet ist. Vorzugsweise sind das zweite Blasluftventil und das dritte Blasluftventil in der radialen Richtung zumindest teilweise ineinander angeordnet. Mittels dieser Anordnung des dritten Blasluftventils kann auf besonders vorteilhafte Weise erreicht werden, dass der Abstand zwischen jedem der ersten, zweiten und dritten Blasluftventile und dem Vorformling deutlich reduziert ist, da diese drei Blasluftventile auf diese Weise im Wesentlichen auf einer Höhe und nahe zum Vorformling angeordnet werden können. Dadurch kann das Totraumvolumen deutlich reduziert werden kann und somit die Druckluft effizienter genutzt werden.

Vorzugsweise umgeben sich das zweite Blasluftventil und das dritte Blasluftventil zumindest teilweise ringförmig. Vorzugsweise umgibt das dritte Blasluftventil das zweite Blasluftventil zumindest teilweise ringförmig. Das zweite Blasluftventil ist demnach zumindest teilweise innerhalb des dritten Blasluftventils angeordnet. Mittels dieser Anordnung des zweiten und dritten Blasluftventils kann auf besonders vorteilhafte Weise erreicht werden, dass der Abstand zwischen dem zweitem Blasluftventil und Vorformling sowie zwischen drittem Blasluftventil und Vorformling deutlich reduziert wird, da diese Blasluftventile auf diese Weise im Wesentlichen auf einer Höhe und nah zum Vorformling angeordnet werden können. Dadurch kann das Totraumvolumen auch bei drei sich zumindest teilweise ringförmig umgebenden Blasluftventilen deutlich reduziert werden und somit die Druckluft effizienter genutzt werden.

Vorzugsweise sind das zweite Blasluftventil und das dritte Blasluftventil bezogen auf die Längsachse zumindest abschnittsweise parallel, also auf der gleichen Höhe entlang der Längsachse, angeordnet. Vorzugsweise sind das erste, das zweite und das dritte Blasluftventil bezogen auf die Längsachse zumindest abschnittsweise parallel, also auf der gleichen Höhe entlang der Längsachse, angeordnet. Dadurch können sowohl das zweite als auch das dritte Blasluftventil auf besonders vorteilhafte Weise unmittelbar oberhalb der Öffnung des Vorformlings angeordnet werden, wodurch das Totraumvolumen reduziert werden kann. Es ist auch möglich, dass das zweite Blasluftventil und das dritte Blasluftventil bezogen auf die Längsachse nur in einem Abschnitt auf der gleichen Höhe angeordnet sind und in einem Abschnitt nicht auf gleicher Höhe angeordnet sind.

Die mehreren Blasluftventile können auch mehr als drei Blasluftventile, beispielsweise ein viertes und gegebenenfalls fünftes Blasluftventil, umfassen. Diese Blasluftventile sind dann vorzugsweise in radialer Richtung zumindest teilweise ineinander angeordnet und umgeben sich zumindest teilweise ringförmig.

Es ist besonders bevorzugt, dass zwischen der Reckstange und dem ersten Blasluftventil eine Reckstangendichtung angeordnet ist.

Die Reckstangendichtung ist vorzugsweise als Gleitdichtung ausgebildet, sodass die Reckstange sich entlang der Längsachse bewegen kann, ohne die Reckstangendichtung mitzubewegen. Die Reckstangendichtung ist vorzugsweise eine dynamische Dichtung, die ausgebildet ist, um eine axiale Bewegung der Reckstange entlang der Längsachse zu erlauben und dabei eine Dichtwirkung zwischen der Reckstange und dem radial inneren Umfang des ersten Blasluftventils bereitzustellen.

Es ist besonders bevorzugt, dass die Reckstangendichtung an dem ersten Blasluftventil angeordnet ist und mit dem ersten Blasluftventil, vorzugsweise kraft- und/oder formschlüssig, verbunden ist. Vorzugsweise ist an dem ersten Blasluftventil eine Dichtungsausnehmung vorgesehen, in der die Reckstangendichtung einsetzbar ist, sodass die Reckstangendichtung hierüber formschlüssig mit dem ersten Blasluftventil verbunden ist. Eine solche Dichtungsausnehmung kann beispielsweise einen oder mehrere Absätze umfassen und/oder nutförmig entlang des Innenumfangs des ersten Blasluftventils ausgebildet sein.

Erfindungsgemäß weisen die Blasluftventile Ventilsitze auf, wobei die Ventilsitze am blasdüsenöffnungsseitigen Ende der Blasluftventile angeordnet sind und relativ zur Längsachse schräg angeordnet sind. Ein Vorteil einer solchen Anordnung der Ventilsitze ist, dass die Dichtflächen nahe zum Vorformling angeordnet werden können, wodurch das Totraumvolumen weiter reduziert werden kann. Es ist auch möglich, dass die Ventilsitze nicht schräg angeordnet sind.

Die Ventilsitze der Blasluftventile sind vorzugsweise als Schrägfläche ausgebildet, wobei die Schrägfläche vorzugsweise schräg zur Längsachse, insbesondere nicht parallel und nicht orthogonal zur Längsachse, beispielsweise in einem Winkel von 45° relativ zur Längsachse, ausgerichtet ist. Ein Vorteil einer solchen Schrägfläche besteht darin, dass die Ventilsitze im geschlossenen Zustand ungefähr auf gleicher Höhe und somit besonders nahe zum Vorformling angeordnet sein können, wodurch das Totraumvolumen weiter reduziert werden kann.

Erfindungsgemäß sind die Ventilsitze unmittelbar benachbart zur Blasdüsenöffnung angeordnet, insbesondere mit einem Abstand zwischen dem der Blasdüsenöffnung nächstkommenden Ringrand der Ventilsitze und der Blasdüsenöffnung von weniger als 120 mm, vorzugsweise weniger als 60 mm, besonders bevorzugt weniger als 20 mm.

Unter einer Anordnung der Ventilsitze unmittelbar benachbart zur Blasdüsenöffnung ist insbesondere ein geringer Abstand zwischen dem der Blasdüsenöffnung nächstkommenden Ringrand der Ventilsitze und der Blasdüsenöffnung zu verstehen, wobei der geringe Abstand weniger als 120 mm, vorzugsweise weniger als 60 mm, besonders bevorzugt weniger als 20 mm, beträgt.

Ein Vorteil einer solchen Anordnung, bei der die Ventilsitze unmittelbar benachbart zur Blasdüsenöffnung angeordnet sind, besteht darin, dass zwischen den Blasluftventilsitzen und dem Vorformling keine großen Volumen vorhanden sind, die bei einer Beaufschlagung mit Druckluft mit der Druckluft gefüllt werden müssen. Dadurch kann ein sehr geringes Totraumvolumen oder sogar gar kein Totraumvolumen oder ein negatives Totraumvolumen realisiert werden.

Es ist besonders bevorzugt, dass die Blasluftventile derart ausgebildet sind, dass sich die projizierte Fläche bei Blickrichtung in Richtung der Längsachse von benachbart angeordneten Blasluftventilen zumindest teilweise überlappt. Vorzugsweise weisen benachbarte Ventile bei einer Projektion oder Blickrichtung entlang der Längsachse sich überschneidende Flächen auf.

Unter benachbart angeordneten Blasluftventilen sind insbesondere Blasluftventile zu verstehen, die ineinander angeordnet sind, wobei kein Blasluftventil zwischen diesen Blasluftventilen angeordnet ist. So sind beispielsweise das erste und das zweite Blasluftventil benachbart angeordnete Blasluftventile. Außerdem sind beispielsweise das zweite und das dritte Blasluftventil benachbart angeordnete Blasluftventile. Das erste und das dritte Blasluftventil sind demnach nicht benachbart angeordnete Blasluftventile.

Vorzugsweise überlappen sich benachbart angeordnete Blasluftventile bei einer Projektion in Blickrichtung entlang der Längsachse. Dadurch ist auf besonders vorteilhafte Weise ein Bewegen eines Blasluftventils entlang der Längsachse nur bis zu einem Anstoßen des Blasluftventils an ein benachbart angeordnetes Blasluftventil möglich, mit Ausnahme des ersten Blasluftventils, da innerhalb des ersten Blasluftventils kein weiteres Blasluftventil angeordnet ist.

Erfindungsgemäß ist vorgesehen, dass in einer Stellung, bei der die Blasluftventile geschlossen sind, die Ventilsitze bezogen auf die Längsachse im Wesentlichen auf der gleichen Höhe angeordnet sind. In dieser Stellung, bei der die Blasluftventile geschlossen sind, sperren die Blasluftventile die jeweiligen Strömungswege, die sie jeweils beherrschen. In dieser Stellung sind die Blasluftventile vorzugsweise bezogen auf die Längsachse weitest möglich in Richtung der Blasdüsenöffnung angeordnet, wodurch auf vorteilhafte Weise das Totraumvolumen reduziert werden kann.

Es ist besonders bevorzugt, dass die Vorrichtung Steuermittel umfasst, mittels derer die mehreren Blasluftventile jeweils in axialer Richtung entlang der Längsachse verstellbar sind. Vorzugsweise umfasst die Vorrichtung Steuerluftanschlüsse, an denen Steuerluftleitungen angeschlossen werden können oder sind, wobei über die Steuerluftleitungen Steuerluft für die Steuermittel bereitgestellt wird, um damit die Blasluftventile jeweils in axialer Richtung entlang der Längsachse zu verstellen. Die Verwendung von Steuerluft ist besonders vorteilhaft, da auch für die Blasformung ein pneumatisches System und Druckluft zur Verfügung gestellt wird. Es ist aber auch möglich, dass die Steuermittel auf andere Weise, also ohne Steuerluft, beispielsweise elektromagnetisch, arbeiten.

Vorzugsweise ist jedes der Blasluftventile pneumatisch steuerbar. Es ist allerdings auch eine nicht-pneumatische Steuerung der Blasluftventile denkbar.

Es ist besonders bevorzugt, dass die Vorrichtung mehrere Leitungen aufweist, die jeweils von einem der Blasluftventile beherrscht sind, die Vorrichtung umfassend eine Vorblasdruckleitung zum Bereitstellen eines Vorblasdrucks, und/oder eine Hauptblasdruckleitung zum Bereitstellen eines Hauptblasdrucks, und/oder eine Zwischendruckleitung zum Bereitstellen eines Zwischendrucks, und/oder eine Entlüftungs-Leitung zum Entlüften des Bereichs der Blasdüsenöffnung, und/oder eine Airbag-Leitung zum Bereitstellen eines Luftdruckrückführungssystems. An den mehreren Leitungen liegen vorzugsweise unterschiedliche Drücke an. Der Vorblasdruck liegt vorzugsweise im Bereich von 5 bar bis 25 bar. Der Zwischendruck liegt vorzugsweise im Bereich von 10 bar bis 35 bar. Der Hauptblasdruck liegt vorzugsweise im Bereich von 20 bar bis 40 bar.

Die mehreren Leitungen sind vorzugsweise die Vorblasdruckleitung, und/oder die Hauptblasdruckleitung, und/oder die Zwischendruckleitung, und/oder die Entlüftungs-Leitung und/oder die Airbag-Leitung.

Es ist besonders bevorzugt, dass die Blasdüse in axialer Richtung entlang der Längsachse zwischen einer Blasstellung, in der die Blasdüsenöffnung dichtend an einem Vorformling und/oder an einer den Vorformling haltenden Blasform anliegt, und einer Ruhestellung, in der die Blasdüsenöffnung beabstandet zu einem Vorformling angeordnet ist, verstellbar ist. Vorzugsweise kann die Blasdüse mittels eines Kniehebels in der Blasstellung gehalten werden.

Es ist besonders bevorzugt, dass die Vorrichtung einen Reckstangenströmungsweg zum Führen von Druckluft durch die Reckstange umfasst, wobei sich der Reckstangenströmungsweg von einer ersten Reckstangenöffnung durch den Druckluftkanal zu einer zweiten Reckstangenöffnung erstreckt.

Dadurch kann auf besonders vorteilhafte Weise erreicht werden, dass, verglichen mit herkömmlichen Vorrichtungen, weniger Blasluftventile außerhalb der Reckstange angeordnet werden müssen, da ein steuerbares Ventil innerhalb der Reckstange angeordnet ist. Dadurch wird ein geringerer Bauraum für einen die Reckstange umgebenden Ventilblock mit Blasluftventilen benötigt.

Ferner können die Blasluftventile, die außerhalb der Reckstange angeordnet sind, auf einfachere Art und Weise ineinander angeordnet werden, insbesondere sich ringförmig umgebend angeordnet werden, da die Anzahl der Blasluftventile außerhalb der Reckstange reduziert ist.

Vorzugsweise ist im Inneren der Reckstange ein steuerbares Druckluftkanalventil angeordnet, das zwischen einer Offenstellung, in der das Druckluftkanalventil den Reckstangenströmungsweg freigibt, und einer Schließstellung, in der das Druckluftkanalventil den Reckstangenströmungsweg schließt, verstellbar ist. Vorzugsweise ist demnach im Inneren der Reckstange ein steuerbares Druckluftkanalventil angeordnet.

Dadurch kann auf besonders vorteilhafte Weise erreicht werden, dass das Totraumvolumen (bei einer gleichbleibenden Anzahl an Strömungswegen und Ventilen insgesamt) weiter verringert werden kann, da ein Blasluftventil weniger im Ventilblock notwendig ist.

Ein weiterer Vorteil besteht darin, dass auch ein Spülen, insbesondere mit Gas, vorzugsweise Luft, nach dem Umformprozess möglich ist, indem Gas durch die Reckstange in den ausgeformten Behälter eingeleitet wird und/oder ein Kühlen des Behälters von innen, also innerhalb des ausgeformten Behälters, insbesondere mit Gas, vorzugsweise Luft, nach dem Umformprozess möglich ist, indem Gas durch die Reckstange in den ausgeformten Behälter eingeleitet wird.

Vorzugsweise ist mit dem Druckluftkanalventil somit innerhalb der Reckstange ein Ventil angeordnet, das derart zwischen der Offenstellung und der Schließstellung verstellbar ist, dass es den Reckstangenströmungsweg freigeben und verschließen kann. Wenn das Druckluftkanalventil in der Schließstellung angeordnet ist, schließt das Druckluftkanalventil den Reckstangenströmungsweg, sodass keine Druckluft durch den Reckstangenströmungsweg durch die Reckstange hindurchgeführt werden kann. Wenn das Druckluftkanalventil in der Offenstellung angeordnet ist, gibt das Druckluftkanalventil den Reckstangenströmungsweg frei, sodass Druckluft durch den Reckstangenströmungsweg durch die Reckstange hindurchgeführt werden kann.

Vorzugsweise ist das Druckluftkanalventil nicht als reines Rückschlagventil ausgebildet. Das Druckluftkanalventil kann insbesondere wie ein Rückschlagventil ausgebildet sein, das jedoch vorzugsweise aktiv und unabhängig von der Beaufschlagung mit Druckluft steuerbar ist.

Die Reckstange weist bevorzugt einen Druckluftkanal auf, der innerhalb der Reckstange verläuft. Der Strömungsweg ist vorzugsweise derart ausgebildet, dass Druckluft durch den Strömungsweg durch die Reckstange geführt werden kann. Der Strömungsweg erstreckt sich dabei von der ersten Reckstangenöffnung durch den Druckluftkanal und bis zu der zweiten Reckstangenöffnung.

Es ist besonders bevorzugt, dass die Reckstange einen Reckstangenendabschnitt mit einer Reckstangenspitze aufweist, wobei sich der Druckluftkanal im Inneren der Reckstange bis zum Reckstangenendabschnitt, vorzugsweise bis zur Reckstangespitze, erstreckt, wobei im Bereich des Reckstangenendabschnitts die zweite Reckstangenöffnung angeordnet ist, die vorzugsweise mehrere seitlich an der Reckstange ausgebildete Austrittsöffnungen umfasst. Dadurch kann ein relativ homogen verteiltes Einblasen von Druckluft in den Vorformling erreicht werden, sodass der Behälter beim Blasprozess entsprechend homogen ausgebildet werden kann.

Das Druckluftkanalventil ist vorzugsweise im Bereich des Reckstangenendabschnitts, und bevorzugt in der Nähe der Reckstangenspitze, angeordnet.

Unter einem Reckstangenendabschnitt ist insbesondere ein Abschnitt der Reckstange zu verstehen, der die Reckstangenspitze umfasst und zusätzlich einen Abschnitt der Reckstange, der an die Reckstangenspitze anschließt. Unter einer Reckstangenspitze ist insbesondere der Teil der Reckstange zu verstehen, der an dem Ende der Reckstange angeordnet ist, das beim Recken des Vorformlings mit dem Vorformling in Kontakt steht. Die Reckstangenspitze kann dabei insbesondere als eine abgerundete Kuppe am Ende der Reckstange ausgebildet sein.

Es ist besonders bevorzugt, dass die Vorrichtung einen Ventilstößel umfasst, der zumindest teilweise innerhalb der Reckstange, und insbesondere zumindest teilweise innerhalb des Druckluftkanals, angeordnet ist, wobei der Ventilstößel angeordnet und ausgebildet ist, um das Druckluftkanalventil zwischen der Offenstellung und der Schließstellung zu verstellen, bevorzugt durch eine reine Axialbewegung entlang der Längsachse, wobei der Ventilstößel vorzugsweise faserverstärkten Kunststoff, insbesondere kohlenstofffaserverstärkten Kunststoff, umfasst oder daraus besteht.

Die zweite Reckstangenöffnung umfasst vorzugsweise mehrere Austrittsöffnungen, die insbesondere im Bereich des Reckstangenendabschnitts angeordnet sind. Die Austrittsöffnungen sind bevorzugt als Bohrungen ausgebildet. Die Austrittsöffnungen können beispielsweise in Richtung des Bodenteils ausgerichtet sein, beispielsweise um eine Kühlung des Bodens des Behälters zu fördern. Die Austrittsöffnungen können aber beispielsweise auch orthogonal zur Längsachse ausgerichtet sein. Es können auch einige Austrittsöffnungen nicht orthogonal und einige Austrittsöffnungen orthogonal zur Längsachse ausgerichtet sein.

Es ist bevorzugt, dass die Austrittsöffnungen symmetrisch um die Längsachse herum verteilt angeordnet sind. Vorzugsweise sind die Austrittsöffnungen derart angeordnet, dass sie vom Vorformling nicht verdeckt werden.

Es ist bevorzugt, dass die Austrittsöffnungen in einer Position der Reckbewegung, bei der die Reckstange am weitesten in den Vorformling eingeführt ist, innerhalb des Vorformlings angeordnet sind.

Das Druckluftkanalventil ist vorzugsweise höchstens 50 mm, besonders bevorzugt höchstens 30 mm, insbesondere höchstens 15 mm, von der Reckstangenspitze beabstandet.

Es ist besonders bevorzugt, dass das Druckluftkanalventil einen Ventilkörper und einen Ventilsitz aufweist, wobei der Ventilkörper und der Ventilsitz ausgebildet und angeordnet sind, um in der Schließstellung des Druckluftkanalventils den Strömungsweg zu schließen und in der Offenstellung des Druckluftkanalventils den Strömungsweg freizugeben, bevorzugt durch eine reine Axialbewegung entlang der Längsachse.

Vorzugsweise ist der Ventilkörper mit dem Ventilstößel verbunden und/oder der Ventilkörper bezogen auf die Längsachse rotationssymmetrisch ausgebildet.

Vorzugsweise wird ein Verstellen des Druckluftkanalventils zwischen der Schließstellung und der Offenstellung durch ein Bewegen des Ventilkörpers relativ zum Ventilsitz, insbesondere entlang der Längsachse, bewirkt.

Vorzugsweise erstreckt sich der Ventilstößel zentrisch innerhalb der, vorzugsweise rohrförmig ausgebildeten, Reckstange und entlang der Längsachse. Der Ventilstößel ist vorzugsweise entlang seiner Längserstreckung und entlang der Längsachse axial bewegbar.

Es ist besonders bevorzugt, dass die zweite Reckstangenöffnung im Bereich des Reckstangenendabschnitts, vorzugsweise nahe der Reckstangenspitze, angeordnet ist, wobei in dem Reckstangenströmungsweg zwischen dem Druckluftkanalventil und der zweiten Reckstangenöffnung eine Druckluftdrossel angeordnet ist, die vorzugsweise im Bereich des Reckstangenendabschnitts, insbesondere nahe der Reckstangenspitze angeordnet ist.

Vorzugsweise ist die zweite Reckstangenöffnung, die mehrere Austrittsöffnungen umfassen kann, bei einem Einleiten von Druckluft durch die Reckstange hindurch in den Vorformling, bezogen auf die Strömungsrichtung durch den Reckstangenströmungsweg hinter dem Druckluftkanalventil angeordnet.

Es ist bevorzugt, dass die erste Reckstangenöffnung beim Einleiten von Druckluft durch die Reckstange hindurch in den Vorformling bezogen auf die Strömungsrichtung vor dem Druckluftkanalventil angerordnet ist. Vorzugsweise wird demnach bei einem Einleiten von Druckluft in den Vorformling die Druckluft von der ersten Reckstangenöffnung entlang des Reckstangenströmungswegs, durch das Druckluftkanalventil hindurch, zur zweiten Reckstangenöffnung und von dort in den Vorformling geführt.

Es ist besonders bevorzugt, dass die Druckluftdrossel eine Bohrung umfasst, die sich vorzugsweise entlang der Längsachse erstreckt, wobei vorzugsweise die Bohrung der Druckluftdrossel einen Durchmesser von mindestens 2 mm, bevorzugt von mindestens 3 mm, aufweist, und wobei vorzugsweise die Bohrung der Druckluftdrossel einen Durchmesser von höchstens 6 mm, bevorzugt von höchstens 5 mm, aufweist. Es ist besonders bevorzugt, dass die Bohrung der Druckluftdrossel einen Durchmesser von 4 mm aufweist.

Vorzugsweise ist der Strömungsquerschnitt der Bohrung der Druckluftdrossel geringer als zumindest ein Abschnitt des Strömungsquerschnitts des Druckluftkanals im Bereich stromaufwärts des Druckluftkanalventils.

Mittels der Druckluftdrossel kann auf besonders vorteilhafte Weise mittels einer Verringerung des Leitungsquerschnitts der Volumenstrom der Druckluft vor dem Austritt aus den Austrittsöffnungen so reguliert werden, dass ein für den Umformprozess optimaler Volumenstrom aus den Austrittsöffnungen in den Vorformling strömt.

Gemäß einem weiteren Aspekt der Erfindung wird die eingangs genannte Aufgabe gelöst durch eine Streckblasmaschine, umfassend ein Blasrad mit mehreren umfangsbeabstandet darauf angeordneten Blasstationen, wobei jede der Blasstationen eine wie hier beschriebene Vorrichtung umfasst. Vorzugsweise sind die Blasstationen ausgebildet und angeordnet, um auf einer Umlaufbahn, insbesondere einer Kreisbahn, zyklisch umzulaufen und vorzugsweise bei jedem Umlaufen einen Umformvorgang auszuführen.

Gemäß einem weiteren Aspekt der Erfindung wird die eingangs genannte Aufgabe gelöst durch ein Verfahren zum Herstellen von Behältern aus thermisch konditionierten Vorformlingen, welche insbesondere aus einem thermoplastischen Material bestehen, insbesondere aus PET, das Verfahren umfassend die Schritte: Bereitstellen einer wie hier beschriebenen Vorrichtung oder einer wie hier beschriebenen Streckblasmaschine, Anordnen des Ventilblocks in einer Position, in der die Blasdüsenöffnung dichtend an einem Vorformling und/oder an einer den Vorformling haltenden Blasform anliegt, Bewegen des ersten Blasluftventils und/oder des zweiten Blasluftventils entlang der Längsachse zum Freigeben des Fluidströmungswegs, der zwischen den zwei Blasluftventilen und zur Blasdüsenöffnung verläuft, und vorzugsweise Aufbringen eines Drucks in dem Vorformling.

Vorzugsweise erfolgt ein mehrstufiger Umformprozess mit mehreren Druckstufen. Dabei wird vorzugsweise zunächst ein niedriger Vorblasdruck, auch P1-Druck genannt, aufgebracht. Besonders bevorzugt ist es, wenn ein Vorblasdruck durch den Reckstangenströmungsweg durch die Reckstange hindurch aufgebracht wird. Vorzugsweise wird anschließend ein Zwischendruck, auch PB-Druck genannt, aufgebracht, der höher als der Vorblasdruck sein kann. Der Zwischendruck kann beispielsweise mittels Öffnen des ersten Blasluftventils aufgebracht werden. Vorzugsweise wird anschließend ein Hauptblasdruck, auch P2-Druck genannt, aufgebracht, der höher als der Zwischendrucksein kann. Der Zwischendruck kann beispielsweise mittels Öffnen des zweiten Blasluftventils aufgebracht werden. Der Vorblasdruck bzw. P1-Druck liegt vorzugsweise im Bereich von 5 bar bis 25 bar. Der Zwischendruck bzw. der PB-Druck liegt vorzugsweise im Bereich von 10 bar bis 35 bar. Der Hauptblasdruck bzw. der P2-Druck liegt vorzugsweise im Bereich von 20 bar bis 40 bar.

Es können auch noch weitere Druckstufen vor, nach oder zwischen diesen Drücken aufgebracht werden. Denkbar ist auch, nur mit einem Vorblasdruck und einem Hauptblasdruck zu arbeiten.

Zu den Vorteilen, Ausführungsvarianten und Ausführungsdetails der verschiedenen Aspekte der hier beschriebenen Lösungen und ihrer jeweiligen möglichen Fortbildungen wird auch auf die Beschreibung zu den entsprechenden Merkmalen, Details und Vorteilen der jeweils anderen Aspekte und ihrer Fortbildungen verwiesen.

Bevorzugte Ausführungsbeispiele werden beispielhaft anhand der beiliegenden Figuren erläutert. Die Zeichnungen sind nicht unbedingt maßstabsgetreu. In den Figuren sind gleiche oder im Wesentlichen funktionsgleiche bzw. -ähnliche Elemente mit den gleichen Bezugszeichen bezeichnet. Es zeigen:
- Fig. 1:: eine stark schematisierte Darstellung einer Streckblasmaschine;
- Fig. 2:: eine schematische Darstellung einer Vorrichtung zum Herstellen von Behältern aus thermisch konditionierten Vorformlingen;
- Fig. 3:: eine schematische Darstellung eines Verfahrens zum Herstellen von Behältern aus thermisch konditionierten Vorformlingen.

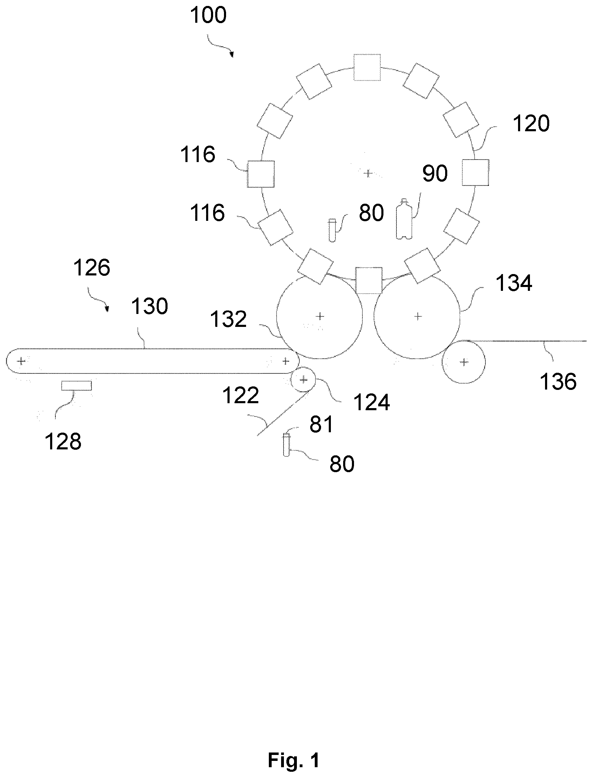

Fig. 1 zeigt eine stark schematisierte Darstellung einer Streckblasmaschine 100. Mittels der Streckblasmaschine 100 können Behälter 90 aus Vorformlingen 80 hergestellt werden. Die Darstellung zeigt die bevorzugte Ausbildung einer solchen Streckblasmaschine als Rotationsmaschine mit einem mehrere Umformstationen 116 tragenden, rotierenden Blasrad 120, das auch als Arbeitsrad bezeichnet werden kann. Im Bereich der Umformstationen 116 werden Vorformlinge 80 durch biaxiale Expansion in Behälter 90 umgeformt.

In einer typischen Ausgestaltung enthält eine Streckblasmaschine 100 zur Herstellung eines Behälters 90 eine Temperiervorrichtung 126 zur Temperierung bzw. thermischen Konditionierung der Vorformlinge 80. Wie vorliegend gezeigt, kann die Temperiervorrichtung 126 dem Blasrad 120 vorgelagert sein, sodass die Vorformlinge 80 vor Erreichen der Umformstationen 116 erwärmt werden können. Von einer Zuführeinrichtung 122 können schematisch dargestellte Vorformlinge 80, die auch als Preforms bezeichnet werden können, unter Verwendung eines Übergaberades 124 kontinuierlich der Temperiervorrichtung 126 zugeführt werden. Im Bereich der Temperiervorrichtung 126 werden die Vorformlinge 80 entlang einer Heizstrecke transportiert und dabei thermisch konditioniert.

Die Temperiervorrichtung 126 ist beispielsweise mit Heizelementen 128 ausgestattet, die entlang einer Transportvorrichtung 130 zur Ausbildung der Heizstrecke angeordnet sind. Als Transportvorrichtung 130 kann beispielsweise eine umlaufende Förderkette mit als Transportdornen ausgebildeten Transportelementen zur Halterung der Vorformlinge 80 verwendet werden. Als Heizelemente 128 eignen sich beispielsweise Infrarot-Strahler (IR-Strahler) oder Licht emittierende Dioden (LED) oder Naheinfrarot-Strahler (NIR-Strahler). Solche Temperiervorrichtungen sind in vielfältiger Art im Stand der Technik bekannt.

Nach einer ausreichenden Temperierung, auch thermische Konditionierung genannt, werden die Vorformlinge 80 von einem Übergaberad 132 zu einem rotationsfähig angeordneten, d.h. um eine vertikale Maschinenachse umlaufend antreibbaren Blasrad 120 bzw. an Umformstationen 116 übergeben, die an dem Blasrad 120 umfangsverteilt angeordnet sind. Das Blasrad 120 ist mit einer Mehrzahl, also mindestens zwei solcher Umformstationen 116 ausgestattet. Für die biaxiale Expansion der Vorformlinge 80 im Bereich der Umformstationen 116 werden die Vorformlinge 80 mit einem unter Druck stehenden Gas beaufschlagt. Die Vorformlinge 80 werden dabei im Bereich der Umformstationen 116 mit einem Blasgas gefüllt, das als Druckmedium für das Formen dient.

Das Blasrad 120 läuft im Produktionsbetrieb kontinuierlich mit einer gewünschten Umlaufgeschwindigkeit um. Während eines Umlaufs erfolgt das Einsetzen eines Vorformlings 80 in eine Umformstation 116, die Expansion des Vorformlings 80 zu einem Behälter 90 und die Entnahme des Behälters 90 aus der Umformstation 116.

Die Umformstationen 116 weisen eine Reckstange auf, die zur Unterstützung der axialen Streckung und Führung in den Vorformling 80 einfahrbar ist. Während eines Umlaufes des Blasrads 120 erfolgt dann auch gleichzeitig eine Reckung der Vorformlinge 80.

Nach dem Formen der Behälter 90 im Bereich des Blasrads 120 werden die Behälter 80 von einem Entnahmerad 134 vom Blasrad 120 entnommen, weitertransportiert und einer Ausgabestrecke 136 zugeführt.

Als Material für die Vorformlinge 80 können unterschiedliche thermoplastische Materialien verwendet werden. Beispielhaft seien Polyethylenterephthalat (PET), Polyethylen (PE), Polyethylennaphthalat (PEN) oder Polypropylen (PP) genannt. Die Dimensionierung sowie das Gewicht der Vorformlinge 80 sind an die Größe, das Gewicht und/oder an die Gestaltung der herzustellenden Behälter 90 angepasst.

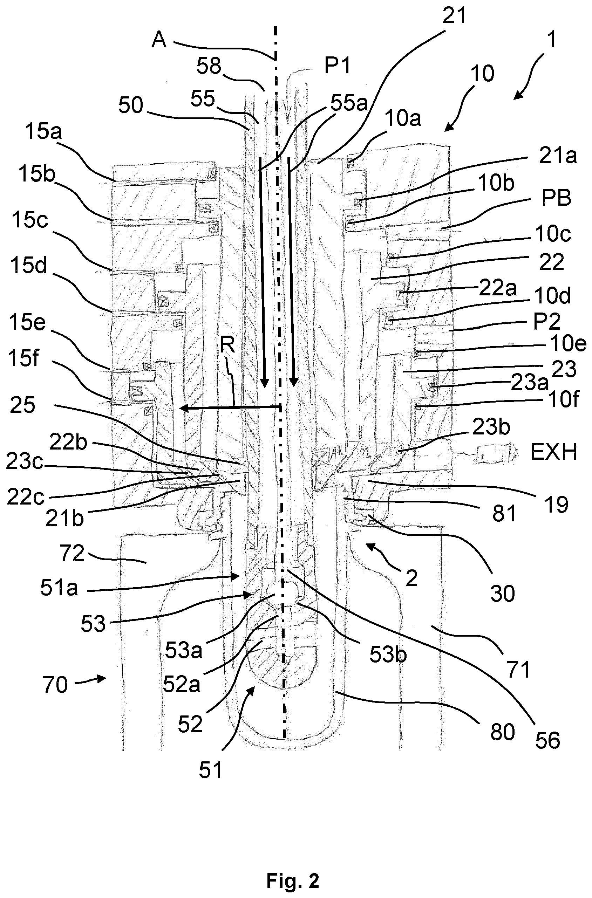

Fig. 2 zeigt eine schematische Schnittansicht einer Vorrichtung zum Herstellen von Behältern aus thermisch konditionierten Vorformlingen. Die in Fig. 2 gezeigte Vorrichtung kann insbesondere ein Teil einer in Fig. 1 gezeigten Umformstation 116 sein oder eine in Fig. 1 gezeigte Umformstation 116 sein.

Die Vorrichtung ist ausgebildet zum Herstellen von Behältern aus thermisch konditionierten Vorformlingen, insbesondere aus einem thermoplastischen Kunststoff, vorzugsweise aus PET. Die Vorrichtung umfasst eine Blasdüse 1 zum Einblasen von Druckluft in einen Vorformling 80 für eine Umformung des Vorformlings 80 in einen Behälter. Die Blasdüse 1 weist eine Blasdüsenöffnung 2 auf. Es ist eine Reckstange 50 zum Recken des Vorformlings 80 vorgesehen. Die Reckstange 50 erstreckt sich entlang einer Längsachse A durch die Blasdüse 1 hindurch und innerhalb der Blasdüse 1. Die Reckstange 50 ist für das Recken des Vorformlings 80 relativ zur Blasdüsenöffnung 2 axial bewegbar.

Die Blasdüse 1 ist in axialer Richtung entlang der Längsachse A zwischen der in Fig. 2 dargestellten Blasstellung, in der die Blasdüsenöffnung 2 dichtend an einem Vorformling 80 anliegt, und einer Ruhestellung (nicht dargestellt), in der die Blasdüsenöffnung 2 beabstandet zu einem Vorformling 80 angeordnet ist, verstellbar. Der Vorformling 80 weist im Bereich der Öffnung des Vorformlings 80 ein Gewinde 81 auf, auf das ein Deckel mit einem entsprechenden Gewinde aufgeschraubt werden kann.

Die Blasdüse 1 weist eine an der Blasdüsenöffnung 2 angeordnete Blasdüsendichtung 30 zum Anlegen der Blasdüsenöffnung 2 an einen Vorformling 80 auf. Die Blasdüsendichtung 30 ist an einem zum Vorformling 80 weisenden Endabschnitt 19 der Blasdüse 1 angeordnet. Mittels einer solchen Blasdüsendichtung 30 kann ein fluiddichtes Anliegen zwischen Blasdüsenöffnung 2 und Vorformling 80 erreicht werden, sodass Druckluft ohne Druckluftverluste an die Umgebung von der Blasdüsenöffnung 2 in den Vorformling 80 und/oder von dem Vorformling 80 zur Blasdüsenöffnung 2 strömen kann.

Der Vorformling 80 ist in einer Blasform 70 angeordnet. Die Blasform 70 umfasst zwei Blasformhälften 71, 72. Die Blasform 70 ist zwischen einem geschlossenen Zustand und einem geöffneten Zustand verstellbar. In Fig. 2 ist die geschlossene Position gezeigt, in der die Blasformhälften eine Umformkavität ausbilden, zum Umformen des Vorformlings 80 in einen Behälter. Die Blasform kann zusätzlich zu den Blasformhälten 71, 72 ein Bodenteil (nicht gezeigt) aufweisen.

Ein Ventilblock 10 weist mehrere Blasluftventile 21, 22, 23 auf, die entlang der Längsachse A und innerhalb des Ventilblocks 10 axial bewegbar sind. Die mehreren Blasluftventile 21, 22, 23 sind ringförmig und rotationssymmetrisch um die Längsachse A ausgebildet. Die hier gezeigten drei Blasluftventile 21, 22, 23 umgeben die Reckstange 50 ringförmig. Die mehreren Blasluftventile 21, 22, 23 umfassen hier ein erstes Blasluftventil 21, ein zweites Blasluftventil 22 und ein drittes Blasluftventil 23. Dabei ist das zweite Blasluftventil 22 benachbart zum ersten Blasluftventil 21 angeordnet und das das dritte Blasluftventil 23 benachbart zum zweiten Blasluftventil 22 angeordnet.

Der Ventilblock 10 weist Dichtungen 10a, 10b auf, die als dynamische Dichtungen ausgebildet sind und bei einer Bewegung des ersten Blasluftventils 21 entlang der Längsachse A eine Dichtwirkung bereitstellen. Das erste Blasluftventil 21 weist eine dynamische Dichtung 21a auf, die bei einer Bewegung des ersten Blasluftventils 21 entlang der Längsachse A eine Dichtwirkung bereitstellen kann. Der Ventilblock 10 weist außerdem Dichtungen 10c, 10d auf, die als dynamische Dichtungen ausgebildet sind und bei einer Bewegung des zweiten Blasluftventils 22 entlang der Längsachse A eine Dichtwirkung bereitstellen. Das zweite Blasluftventil 22 weist eine dynamische Dichtung 22a auf, die bei einer Bewegung des zweiten Blasluftventils 22 entlang der Längsachse A eine Dichtwirkung bereitstellen kann. Der Ventilblock 10 weist ferner Dichtungen 10e, 10f auf, die als dynamische Dichtungen ausgebildet sind und bei einer Bewegung des dritten Blasluftventils 23 entlang der Längsachse A eine Dichtwirkung bereitstellen. Das dritte Blasluftventil 23 weist eine dynamische Dichtung 23a auf, die bei einer Bewegung des dritten Blasluftventils 23 entlang der Längsachse A eine Dichtwirkung bereitstellen kann.

Zwischen den Blasluftventilen ist jeweils eine Dichtfläche angeordnet. So ist zwischen dem ersten Blasluftventil 21 und dem zweiten Blasluftventil 22 eine Dichtfläche 22c an dem zweiten Blasluftventil 22 angeordnet, die beim aneinander Anliegen dieser zwei Blasluftventile 21, 22 einen Fluidströmungsweg für eine Gasströmung, der zwischen diesen zwei Blasluftventilen 21, 22 und zur Blasdüsenöffnung 2 verläuft, mittels einer Dichtwirkung sperrt. Ferner ist zwischen dem zweiten Blasluftventil 22 und dem dritten Blasluftventil 23 eine Dichtfläche 23c an dem dritten Blasluftventil 23 angeordnet ist, die beim aneinander Anliegen dieser zwei Blasluftventile 22, 23 einen Fluidströmungsweg für eine Gasströmung, der zwischen diesen zwei Blasluftventilen 22, 23 und zur Blasdüsenöffnung 2 verläuft, mittels einer Dichtwirkung sperrt.

Das erste Blasluftventil 21 ist in einer radialen Richtung R, die orthogonal zur Längsachse A verläuft, zumindest teilweise innerhalb des zweiten Blasluftventils 22 angeordnet.

Zwischen der Reckstange 50 und dem ersten Blasluftventil 21 ist eine Reckstangendichtung 25 angeordnet. Die Reckstangendichtung 25 ist als Gleitdichtung ausgebildet, sodass die Reckstange 50 sich entlang der Längsachse A bewegen kann, ohne die Reckstangendichtung 25 mitzubewegen. Die Reckstangendichtung 25 ist in einer umlaufenden Nut des ersten Blasluftventils 21 angeordnet.

Die Blasluftventile 21, 22, 23 weisen Ventilsitze 21b, 22b, 23b auf. Die Ventilsitze 21b, 22b, 23b sind am blasdüsenöffnungsseitigen Ende der Blasluftventile 21, 22, 23 angeordnet und relativ zur Längsachse A schräg angeordnet und als Schrägflächen ausgebildet, also schräg zur Längsachse A, beispielsweise in einem Winkel von 45° relativ zur Längsachse A, ausgerichtet. Die Ventilsitze 21b, 22b, 23b sind bei der hier gezeigten Anordnung unmittelbar benachbart zur Blasdüsenöffnung 2 angeordnet.

Es sind ferner Steuermittel 15a, b, c, d, e, f vorgesehen, mittels derer die mehreren Blasluftventile 21, 22, 23 jeweils in axialer Richtung entlang der Längsachse A verstellbar sind. Die Steuermittel umfassen Steuerluftanschlüsse 15a, b, c, d, e, f, an denen Steuerluftleitungen angeschlossen werden können, sodass über die Steuerluftleitungen Steuerluft bereitgestellt werden kann, um damit die Blasluftventile 21, 22, 23 jeweils, und insbesondere unabhängig voneinander, in axialer Richtung entlang der Längsachse A zu verstellen. Die Blasluftventile 21, 22, 23 sind somit pneumatisch steuerbar.

Es ist eine Hauptblasleitung P2 zum Bereitstellen eines Hauptblasdrucks vorgesehen. Ferner ist eine Zwischendruckleitung PB zum Bereitstellen eines Zwischendrucks vorgesehen. Außerdem ist eine Entlüftungs-Leitung EXH zum Entlüften des Bereichs der Blasdüsenöffnung 2 vorgesehen. Es kann auch eine Airbag-Leitung zum Bereitstellen eines Luftdruckrückführungssystems vorgesehen sein.

Es ist außerdem eine Vorblasdruckleitung P1 zum Bereitstellen eines Vorblasdrucks vorgesehen. Der Vorblasdruck wird bei dem hier beschriebenen Ausführungsbeispiel allerdings nicht außerhalb der Reckstange 50, sondern durch die Reckstange 50 hindurch in den Vorformling 80 eingeleitet.

Dafür ist ein Reckstangenströmungsweg 55a zum Führen von Druckluft durch die Reckstange 50 vorgesehen. Der Reckstangenströmungsweg 55a erstreckt sich von einer ersten Reckstangenöffnung 58 durch einen Druckluftkanal 55, der innerhalb der Reckstange 50 verläuft, zu einer zweiten Reckstangenöffnung 52.

Die zweite Reckstangenöffnung 52 umfasst vorzugsweise mehrere Austrittsöffnungen, die insbesondere im Bereich des Reckstangenendabschnitts 51a angeordnet sind. Die Austrittsöffnungen sind bevorzugt als Bohrungen ausgebildet. Die Austrittsöffnungen sind in dem hier dargestellten Ausführungsbeispiel orthogonal zur Längsachse A ausgerichtet und symmetrisch um die Längsachse A herum verteilt.

Im Inneren der Reckstange 50 ist ein steuerbares Druckluftkanalventil 53 angeordnet, das zwischen einer Offenstellung, in der das Druckluftkanalventil 53 den Reckstangenströmungsweg 55a freigibt, und einer Schließstellung, in der das Druckluftkanalventil 53 den Reckstangenströmungsweg 55a schließt, verstellbar ist. Innerhalb der Reckstange 50 ist damit ein Ventil angeordnet, das derart zwischen der Offenstellung und der Schließstellung verstellbar ist, dass es den Reckstangenströmungsweg 55a freigeben und verschließen kann. Wenn das Druckluftkanalventil 53 in der Schließstellung (wie in Fig. 2 gezeigt) angeordnet ist, schließt das Druckluftkanalventil 53 den Reckstangenströmungsweg 55a, sodass keine Druckluft durch den Reckstangenströmungsweg 55a durch die Reckstange 50 hindurchgeführt werden kann. Wenn das Druckluftkanalventil 53 in der Offenstellung angeordnet ist, gibt das Druckluftkanalventil 53 den Reckstangenströmungsweg 55a frei, sodass Druckluft durch den Reckstangenströmungsweg 55a durch die Reckstange 50 hindurchgeführt werden kann. Das Druckluftkanalventil 53 umfasst einen Ventilkörper 53a und einen Ventilsitz 53b.

In dem Strömungsweg 55a ist zwischen dem Druckluftkanalventil 53 und der zweiten Reckstangenöffnung 52 eine Druckluftdrossel 52a angeordnet ist, die im Bereich des Reckstangenendabschnitts 51a und nahe der Reckstangenspitze 51 angeordnet ist. Die Druckluftdrossel 52a umfasst eine Bohrung 52a umfasst, die sich entlang der Längsachse A erstreckt.

Ein Ventilstößel 56 ist mit dem Druckluftkanalventil 53 verbunden. Mittels des Ventilstößels 56, der zumindest teilweise innerhalb der Reckstange 50 und innerhalb des Druckluftkanals 55 angeordnet ist, kann das Druckluftkanalventil 53 zwischen der Offenstellung und der Schließstellung verstellt werden. Dies wird dadurch ermöglicht, dass der Ventilstößel 56 eine Axialbewegung entlang der Längsachse A ausführt und sich dadurch das mit dem Ventilstößel 56 verbundene Druckluftkanalventil 53 ebenfalls entlang der Längsachse A bewegt.

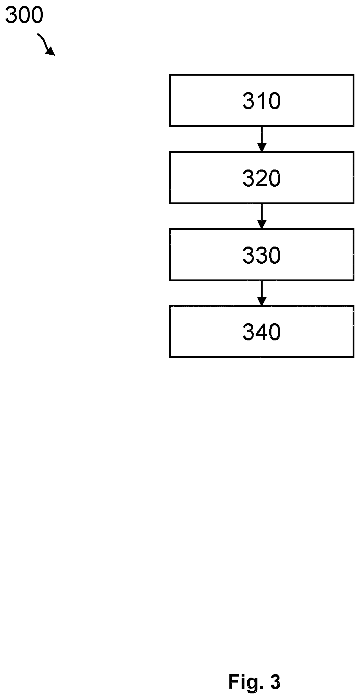

Fig. 3 zeigt eine schematische Darstellung eines Verfahrens 300 zum Herstellen von Behältern aus thermisch konditionierten Vorformlingen. Das Verfahren umfasst folgende Schritte: In einem Schritt 310, Bereitstellen einer Vorrichtung oder einer Streckblasmaschine, wie in Fig. 1 oder Fig. 2 beschrieben. In einem Schritt 320, Anordnen des Ventilblocks 10 in einer Position, in der die Blasdüsenöffnung 2 dichtend an einem Vorformling 80 und/oder an einer den Vorformling 80 haltenden Blasform 70 anliegt. In einem Schritt 330, Bewegen des ersten Blasluftventils 21 und/oder des zweiten Blasluftventils 22 entlang der Längsachse A zum Freigeben des Fluidströmungswegs, der zwischen den zwei Blasluftventilen 21, 22 und zur Blasdüsenöffnung 2 verläuft. In einem Schritt 340, Aufbringen eines Drucks in dem Vorformling 80 mittels eines mehrstufigen Umformprozesses mit mehreren Druckstufen. Dabei kann zunächst ein niedriger Vorblasdruck, P1-Druck, aufgebracht werden, indem der Vorblasdruck durch den Reckstangenströmungsweg durch die Reckstange hindurch in den Vorformling eingeleitet wird. Anschließend kann ein Zwischendruck, PB-Druck, aufgebracht werden, der höher als der Vorblasdruck ist. Anschließend kann ein Hauptblasdruck, P2-Druck, aufgebracht werden, der höher als der Zwischendruck ist.

### Bezugszeichenliste

- 1: Blasdüse
- 2: Blasdüsenöffnung
- 10: Ventilblock
- 10a-f: Dichtungen des Ventilblocks
- 15a-f: Steuermittel
- 19: Endabschnitt des Ventilblocks
- 21: erstes Blasluftventil
- 21a: Dichtung des ersten Blasluftventils
- 21b: Ventilsitz des ersten Blasluftventils
- 22: zweites Blasluftventil
- 22a: Dichtung des zweiten Blasluftventils
- 22b: Ventilsitz des zweiten Blasluftventils
- 22c: Dichtfläche des zweiten Blasluftventils
- 23: drittes Blasluftventil
- 23a: Dichtung des dritten Blasluftventils
- 23b: Ventilsitz des dritten Blasluftventils
- 23c: Dichtfläche des dritten Blasluftventils
- 25: Reckstangendichtung
- 30: Blasdüsendichtung
- 50: Reckstange
- 52: zweite Reckstangenöffnung
- 53: Druckluftkanalventil
- 53a: Ventilkörper
- 53b: Ventilsitz
- 55: Druckluftkanal
- 55a: Reckstangenströmungsweg
- 56: Ventilstößel
- 58: erste Reckstangenöffnung
- 59: Ventilkolben
- 70: Blasform
- 71: Blasformhälfte der Blasform
- 72: Blasformhälfte der Blasform
- 80: Vorformling
- 81: Gewinde des Vorformlings
- 90: Behälter
- 100: Streckblasmaschine
- 116: Umformstation
- 120: Blasrad
- 122: Zuführeinrichtung
- 124: Übergaberad
- 126: Temperiervorrichtung
- 128: Heizelemente
- 130: Transportvorrichtung
- 132: Übergaberad
- 134: Entnahmerad
- 136: Ausgabestrecke
- 300: Verfahren
- 310-340: Verfahrensschritte
- A: Längsachse
- EXH: Entlüftungs-Leitung
- P1: Vorblasdruckleitung
- PB: Zwischendruckleitung
- P2: Hauptblasdruckleitung
- R: radiale Richtung

## Patentansprüche

1. Vorrichtung zum Herstellen von Behältern (90) aus thermisch konditionierten Vorformlingen, insbesondere aus einem thermoplastischen Kunststoff, vorzugsweise aus PET, die Vorrichtung umfassend
- eine Blasdüse (1) zum Einblasen von Druckluft in einen Vorformling (80) für eine Umformung des Vorformlings (80) in einen Behälter (90), wobei die Blasdüse (1) eine Blasdüsenöffnung (2) aufweist,
- eine Reckstange (50) zum Recken des Vorformlings (80), die sich entlang einer Längsachse (A) durch die Blasdüse (1) und zumindest teilweise innerhalb der Blasdüse (1) erstreckt, und die für das Recken des Vorformlings (80) relativ zur Blasdüsenöffnung (2) axial bewegbar ist,
- einen Ventilblock (10) mit mehreren Blasluftventilen (21, 22, 23), die entlang der Längsachse (A) und innerhalb des Ventilblocks (10) axial bewegbar sind und die mindestens abschnittsweise ringförmig ausgebildet sind, wobei mindestens zwei der Blasluftventile die Reckstange (50) mindestens abschnittsweise ringförmig umgeben,
- wobei die mehreren Blasluftventile (21, 22, 23) ein erstes Blasluftventil (21) und ein zweites Blasluftventil (22) umfassen, wobei das zweite Blasluftventil (22) benachbart zum ersten Blasluftventil (21) angeordnet ist,
- wobei zwischen dem ersten Blasluftventil (21) und dem zweiten Blasluftventil (22) eine Dichtfläche (22c) an mindestens einem dieser zwei Blasluftventile (21, 22) angeordnet ist, die beim aneinander Anliegen dieser zwei Blasluftventile (21, 22) einen Fluidströmungsweg für eine Fluidströmung, insbesondere für eine Gasströmung, der zwischen diesen zwei Blasluftventilen (21, 22) und zur Blasdüsenöffnung (2) verläuft, mittels einer Dichtwirkung sperrt,
wobei das erste Blasluftventil (21) in einer radialen Richtung (R), die orthogonal zur Längsachse (A) verläuft, zumindest teilweise innerhalb des zweiten Blasluftventils (22) angeordnet ist,
**dadurch gekennzeichnet, dass** die Blasluftventile (21, 22, 23) Ventilsitze (21b, 22b, 23b) aufweisen, wobei die Ventilsitze (21b, 22b, 23b) am blasdüsenöffnungsseitigen Ende der Blasluftventile (21, 22, 23) angeordnet sind und relativ zur Längsachse (A) schräg angeordnet sind, wobei die Ventilsitze (21b, 22b, 23b) unmittelbar benachbart zur Blasdüsenöffnung (2) angeordnet sind,
wobei in einer Stellung, bei der die Blasluftventile (21, 22, 23) geschlossen sind, die Ventilsitze (21b, 22b, 23b) bezogen auf die Längsachse (A) im Wesentlichen auf der gleichen Höhe angeordnet sind.

2. Vorrichtung nach dem vorhergehenden Anspruch,
wobei die mehreren Blasluftventile (21, 22, 23) ein drittes Blasluftventil (23) umfassen, das benachbart zum zweiten Blasluftventil (22) angeordnet ist,
wobei vorzugsweise das zweite Blasluftventil (22) und das dritte Blasluftventil (23) in der radialen Richtung (R) zumindest teilweise ineinander angeordnet sind, und/oder wobei zwischen der Reckstange (50) und dem ersten Blasluftventil (21) eine Reckstangendichtung (25) angeordnet ist.

3. Vorrichtung nach einem der vorhergehenden Ansprüche,
wobei die Ventilsitze (21b, 22b, 23b) unmittelbar benachbart zur Blasdüsenöffnung (2) angeordnet sind, mit einem Abstand zwischen dem der Blasdüsenöffnung (2) nächstkommenden Ringrand der Ventilsitze (21b, 22b, 23b) und der Blasdüsenöffnung (2) von weniger als 120 mm, vorzugsweise weniger als 60 mm, besonders bevorzugt weniger als 20 mm.

4. Vorrichtung nach einem der vorhergehenden Ansprüche,
wobei die Blasluftventile (21, 22, 23) derart ausgebildet sind, dass sich die projizierte Fläche bei Blickrichtung in Richtung der Längsachse (A) von benachbart angeordneten Blasluftventilen zumindest teilweise überlappt.

5. Vorrichtung nach einem der vorhergehenden Ansprüche, umfassend Steuermittel (15a, b, c, d, e, f), mittels derer die mehreren Blasluftventile (21, 22, 23) jeweils in axialer Richtung entlang der Längsachse (A) verstellbar sind,
wobei vorzugsweise jedes der Blasluftventile (21, 22, 23) pneumatisch steuerbar ist.

6. Vorrichtung nach einem der vorhergehenden Ansprüche, wobei die Vorrichtung mehrere Leitungen aufweist, die jeweils von einem der Blasluftventile (21, 22, 23) beherrscht sind,
die Vorrichtung umfassend
- eine Vorblasdruckleitung (P1) zum Bereitstellen eines Vorblasdrucks, und/oder
- eine Hauptblasdruckleitung (P2) zum Bereitstellen eines Hauptblasdrucks, und/oder
- eine Zwischendruckleitung (PB) zum Bereitstellen eines Zwischendrucks, und/oder
- eine Entlüftungs-Leitung (EXH) zum Entlüften des Bereichs der Blasdüsenöffnung (2), und/oder
- eine Airbag-Leitung zum Bereitstellen eines Luftdruckrückführungssystems.

7. Vorrichtung nach einem der vorhergehenden Ansprüche,
wobei die Blasdüse (1) in axialer Richtung entlang der Längsachse (A) zwischen einer Blasstellung, in der die Blasdüsenöffnung (2) dichtend an einem Vorformling (80) und/oder an einer den Vorformling (80) haltenden Blasform (70) anliegt, und einer Ruhestellung, in der die Blasdüsenöffnung (2) beabstandet zu einem Vorformling (80) angeordnet ist, verstellbar ist.

8. Vorrichtung nach einem der vorhergehenden Ansprüche, umfassend
- ein Reckstangenströmungsweg (55a) zum Führen von Druckluft durch die Reckstange (50), wobei sich der Reckstangenströmungsweg (55a) von einer ersten Reckstangenöffnung (58) durch den Druckluftkanal (55) zu einer zweiten Reckstangenöffnung (52) erstreckt,
wobei im Inneren der Reckstange (50) ein steuerbares Druckluftkanalventil (53) angeordnet ist, das zwischen einer Offenstellung, in der das Druckluftkanalventil (53) den Reckstangenströmungsweg (55a) freigibt, und einer Schließstellung, in der das Druckluftkanalventil (53) den Reckstangenströmungsweg (55a) schließt, verstellbar ist.

9. Vorrichtung nach einem der vorhergehenden Ansprüche,
wobei die Reckstange (50) einen Reckstangenendabschnitt (51a) mit einer Reckstangenspitze (51) aufweist, wobei sich der Druckluftkanal (55) im Inneren der Reckstange (50) bis zum Reckstangenendabschnitt (51a), vorzugsweise bis zur Reckstangespitze (51), erstreckt,
wobei im Bereich des Reckstangenendabschnitts (51a) die zweite Reckstangenöffnung (52) angeordnet ist, die vorzugsweise mehrere seitlich an der Reckstange (50) ausgebildete Austrittsöffnungen (52b, 52c) umfasst,
wobei das Druckluftkanalventil (53) vorzugsweise im Bereich des Reckstangenendabschnitts (51a), und bevorzugt in der Nähe der Reckstangenspitze (51), angeordnet ist.

10. Vorrichtung nach einem der vorhergehenden Ansprüche, umfassend
ein Ventilstößel (56), der zumindest teilweise innerhalb der Reckstange (50), und insbesondere zumindest teilweise innerhalb des Druckluftkanals (55), angeordnet ist, wobei der Ventilstößel (56) angeordnet und ausgebildet ist, um das Druckluftkanalventil (53) zwischen der Offenstellung und der Schließstellung zu verstellen, bevorzugt durch eine reine Axialbewegung entlang der Längsachse (A),
wobei der Ventilstößel (56) vorzugsweise faserverstärkten Kunststoff, insbesondere kohlenstofffaserverstärkten Kunststoff, umfasst oder daraus besteht.

11. Vorrichtung nach einem der vorhergehenden Ansprüche,
wobei das Druckluftkanalventil (53) einen Ventilkörper (53a) und einen Ventilsitz (53b) aufweist, wobei der Ventilkörper (53a) und der Ventilsitz (53b) ausgebildet und angeordnet sind, um in der Schließstellung des Druckluftkanalventils (53) den Strömungsweg (55a) zu schließen und in der Offenstellung des Druckluftkanalventils (53) den Strömungsweg (55a) freizugeben, bevorzugt durch eine reine Axialbewegung entlang der Längsachse (A),
wobei vorzugsweise der Ventilkörper (53a) mit dem Ventilstößel (56) verbunden ist und/oder der Ventilkörper (53a) bezogen auf die Längsachse (A) rotationssymmetrisch ausgebildet ist.

12. Vorrichtung nach einem der vorhergehenden Ansprüche,
wobei die zweite Reckstangenöffnung (52) im Bereich des Reckstangenendabschnitts (51a), vorzugsweise nahe der Reckstangenspitze (51), angeordnet ist,
wobei in dem Strömungsweg (55a) zwischen dem Druckluftkanalventil (53) und der zweiten Reckstangenöffnung (52) eine Druckluftdrossel (52a) angeordnet ist, die vorzugsweise im Bereich des Reckstangenendabschnitts (51a), insbesondere nahe der Reckstangenspitze (51) angeordnet ist.

13. Vorrichtung nach einem der vorhergehenden Ansprüche,
wobei die Druckluftdrossel (52a) eine Bohrung (52a) umfasst, die sich vorzugsweise entlang der Längsachse (A) erstreckt,
wobei vorzugsweise die Bohrung (52a) einen Durchmesser von mindestens 2 mm, bevorzugt von mindestens 3 mm, aufweist,
und wobei vorzugsweise die Bohrung (52a) einen Durchmesser von höchstens 6 mm, bevorzugt von höchstens 5 mm, aufweist.

14. Streckblasmaschine (100), umfassend
- ein Blasrad (120) mit mehreren Blasstationen (116), wobei jede der Blasstationen (116) eine Vorrichtung nach einem der vorhergehenden Ansprüche umfasst.

15. Verfahren (300) zum Herstellen von Behältern aus thermisch konditionierten Vorformlingen, welche insbesondere aus einem thermoplastischen Material bestehen, insbesondere aus PET, umfassend die Schritte:
- Bereitstellen (310) einer Vorrichtung oder einer Streckblasmaschine nach einem der vorhergehenden Ansprüche,
- Anordnen (320) des Ventilblocks (10) in einer Position, in der die Blasdüsenöffnung (2) dichtend an einem Vorformling (80) und/oder an einer den Vorformling (80) haltenden Blasform (70) anliegt,
- Bewegen (330) des ersten Blasluftventils (21) und/oder des zweiten Blasluftventils (22) entlang der Längsachse (A) zum Freigeben des Fluidströmungswegs, der zwischen den zwei Blasluftventilen (21, 22) und zur Blasdüsenöffnung (2) verläuft, und vorzugsweise Aufbringen (340) eines Drucks in dem Vorformling (80).

## Claims

1. Device for manufacturing containers (90) from thermally conditioned preforms, in particular from a thermoplastic, preferably of PET, with the device comprising
- a blowing nozzle (1) for blowing compressed air into a preform (80) for forming the preform (80) into a container (90), wherein the blowing nozzle (1) comprises a blowing-nozzle opening (2),
- a horizontal bar (50) for stretching the preform (80), which extends along a longitudinal axis (A) through the blowing nozzle (1) and at least partially within the blowing nozzle (1), and which is axially moveable for stretching the preform (80) relative to the blowing-nozzle opening (2),
- a valve block (10) comprising a plurality of blowing air valves (21, 22, 23), which are axially moveable along the longitudinal axis (A) and within the valve block (10) and which are formed in a ring shape at least in sections, wherein at least two of the blowing air valves surround the horizontal bar (50) in a ring shape at least in sections,
- wherein the plurality of blowing air valves (21, 22, 23) comprise a first blowing air valve (21) and a second blowing air valve (22), wherein the second blowing air valve (22) is arranged adjacent to the first blowing air valve (21),
- wherein, between the first blowing air valve (21) and the second blowing air valve (22) a sealing surface (22c) is arranged on at least one of these two blowing air valves (21, 22) which, when these two blowing air valves (21, 22) are in contact with each other, blocks a fluid flow path for a fluid flow, in particular, for a gas flow, which runs between these two blowing air valves (21, 22) and to the blowing-nozzle opening (2) by means of a sealing effect,
wherein the first blowing air valve (21) is arranged in a radial direction (R) which runs orthogonal to the longitudinal axis (A), at least partially within the second blowing air valve (22),
**characterized in that**
the blowing air valves (21, 22, 23) comprise valve seats (21b, 22b, 23b), wherein the valve seats (21b, 22b, 23b) are arranged at the end of the blowing-nozzle opening side of the blowing air valves (21, 22, 23) and are arranged at an angle relative to the longitudinal axis (A),
wherein the valve seats (21b, 22b, 23b) are arranged immediately adjacent to the blowing-nozzle opening (2),
wherein, in a position in which the blowing air valves (21, 22, 23) are closed, the valve seats (21b, 22b, 23b) are arranged at essentially the same height with respect to the longitudinal axis (A).

2. The device according to the preceding claim,
wherein the plurality of blow air valves (21, 22, 23) comprise a third blow air valve (23) which is arranged adjacent to the second blow air valve (22), wherein preferably the second blowing air valve (22) and the third blowing air valve (23) are at least partially arranged in the radial direction (R) and/or wherein a horizontal bar seal (25) is arranged between the horizontal bar (50) and the first blowing air valve (21).

3. The device according to any one of the preceding claims,
wherein the valve seats (21b, 22b, 23b) are arranged immediately adjacent to the blowing-nozzle opening (2), with a distance between the annular edge of the valve seats (21b, 22b, 23b) closest to the blowing-nozzle opening (2) and the blowing-nozzle opening (2) of less than 120 mm, preferably less than 60 mm, being particularly preferred, less than 20 mm.

4. The device according to any one of the preceding claims,
wherein the blowing air valves (21, 22, 23) are designed in such a way that the projected surface overlaps at least partially when viewing in the direction of the longitudinal axis (A) of blowing air valves arranged adjacently.

5. The device according to any one of the preceding claims, comprising
control means (15a, b, c, d, e, f), by means of which the plurality of blowing air valves (21, 22, 23) can be adjusted in the axial direction along the longitudinal axis (A),
wherein, preferably, each of the blowing air valves (21, 22, 23) can be pneumatically controlled.

6. The device according to any one of the preceding claims, wherein the device comprises a plurality of lines, each controlled by one of the blowing air valves (21, 22, 23)
with the device comprising
- a pre-blow pressure line (P1) to provide a pre-blow pressure, and/or
- a main blowing pressure line (P2) to provide a main blowing pressure, and/or
- an intermediate pressure line (PB) to provide an intermediate pressure, and/or
- a vent line (EXH) for bleeding the area of the blowing-nozzle opening (2), and/or
- an airbag line to provide an air pressure recirculation system.

7. The device according to any one of the preceding claims,
wherein the blowing nozzle (1) is adjustable in the axial direction along the longitudinal axis (A) between a blow mould in which the blowing-nozzle opening (2) is tightly attached to a preform (80) and/or to a blow mould (70) holding the preform (80) and a rest position in which the blowing-nozzle opening (2) is spaced apart from a preform (80).

8. The device according to any one of the preceding claims, comprising
- a horizontal bar flow path (55a) for guiding compressed air through the horizontal bar (50), wherein the horizontal bar flow path (55a) extends from a first horizontal-bar opening (58) through the compressed air channel (55) to a second horizontal-bar opening (52),
wherein a controllable compressed-air duct valve (53) is arranged inside the horizontal bar (50) which is adjustable between an open position in which the compressed air channel valve (53) releases the horizontal bar flow path (55a) and a closing position in which the compressed air channel valve (53) closes the horizontal bar flow path (55a).

9. The device according to any one of the preceding claims,
wherein the horizontal bar (50) comprises a horizontal-bar end section (51a) with a horizontal-bar tip (51), wherein the compressed-air duct (55) inside the horizontal bar (50) extends to the horizontal-bar end section (51a), preferably to the horizontal bar tip (51),
wherein, in the area of the end section of the horizontal bar (51a), the second opening of the horizontal bar (52) is arranged, which preferably comprises a plurality of outlet openings (52b, 52c) formed laterally on the horizontal bar (50),
wherein the compressed-air duct valve (53) is preferably located in the area of the end section of the horizontal bar (51a), and preferably in the vicinity of the tip of the horizontal bar (51).

10. The device according to any one of the preceding claims, comprising
a valve tappet (56) which is arranged at least partially within the stretching rod (50), and in particular at least partially within the compressed-air duct (55), wherein the valve tappet (56) is arranged and designed to adjust the compressed-air duct valve (53) between the opening and the closing position, preferably via a pure axial movement along the longitudinal axis (A),
wherein the valve tappet (56) preferably comprises or consists of fibre-reinforced plastic, in particular, carbon fibre-reinforced plastic.

11. The device according to any one of the preceding claims,
wherein the compressed-air duct valve (53) comprises a valve body (53a) and a valve seat (53b), wherein the valve body (53a) and the valve seat (53b) are formed and arranged to close the flow path (55a) in the closing position of the compressed-air duct valve (53) and to release the flow path (55a) in the opening position of the compressed-air duct valve (53), preferably via a pure axial movement along the longitudinal axis (A),
wherein the valve body (53a) is preferably connected to the valve tappet (56) and/or the valve body (53a) is rotationally symmetrical in relation to the longitudinal axis (A).

12. The device according to any one of the preceding claims,
wherein the second horizontal-bar opening (52) is located in the area of the end section of the horizontal bar (51a), preferably near the top of the horizontal bar (51),
wherein in the flow path (55a), between the compressed-air duct valve (53) and the second horizontal-bar opening (52), a compressed air throttle (52a) is arranged, which is preferably located in the area of the end section of the horizontal bar (51a), in particular near the top of the horizontal bar (51).

13. The device according to any one of the preceding claims,
wherein the compressed air throttle (52a) comprises a bore hole (52a) which extends preferably along the longitudinal axis (A),
wherein preferably the bore hole (52a) comprises a diameter of at least 2 mm, preferably of at least 3 mm,
and wherein preferably the bore hole (52a) comprises a diameter not exceeding 6 mm, preferably not more than 5 mm.

14. Stretch blow-moulding machine (100), comprising
- a blowing wheel (120) comprising a plurality of blowing stations (116), wherein each of which of the blowing stations (116) comprises a device according to any one of the preceding claims.

15. A method (300) for manufacturing containers from thermally conditioned preforms consisting, in particular, of a thermoplastic material, in particular PET, comprising the steps:
- providing (310) a device or a stretch-blow moulding machine according to any one of the preceding claims,
- arranging (320) the valve block (10) in a position in which the blowing-nozzle opening (2) is tightly attached to a preform (80) and/or to a blow mould (70) holding the preform (80),
- moving (330) the first blow air valve (21) and/or the second blow air valve (22) along the longitudinal axis (A) to release the fluid flow path running between the two blow air valves (21, 22) and to the blowing-nozzle opening (2) and preferably applying (340) a pressure in the preform (80).

## Revendications

1. Dispositif de fabrication de récipients (90) à partir de préformes thermiquement conditionnées notamment en matière thermoplastique, de préférence en PET, le dispositif comprenant
- une buse de soufflage (1) pour l'injection d'air comprimé dans une préforme (80) dans le but de transformer la préforme (80) en un récipient (90), la buse de soufflage (1) présentant un orifice (2),
- une barre d'étirage (50) pour étirer la préforme (80) qui s'étend le long d'un axe longitudinal (A) à travers la buse de soufflage (1) et partiellement au moins à l'intérieur de la buse de soufflage (1) et qui, pour étirer la préforme (80), est mobile axialement par rapport à l'orifice (2) de la buse de soufflage,
- un bloc de valves (10) avec plusieurs valves d'injection d'air (21, 22, 23) mobiles axialement le long de l'axe longitudinal (A) et à l'intérieur du bloc de valves (10) et qui sont sur certaines sections au moins de conformation annulaire, deux valves d'injection d'air au moins entourant annulairement au moins certaines sections de la barre d'étirage (50),
- la pluralité de valves d'injection d'air (21, 22, 23) comportant une première valve d'injection d'air (21) et une deuxième valve d'injection d'air (22), l'agencement de la deuxième valve d'injection d'air (22) étant adjacent à la première valve d'injection d'air (21),
- une surface d'étanchéification (22c) étant agencée entre la première valve d'injection d'air (21) et la deuxième valve d'injection d'air (22) sur au moins l'une de ces deux valves d'injection d'air (21, 22), laquelle surface d'étanchéification (22c) obture lors de la juxtaposition de ces deux valves d'injection d'air (21, 22) par son effet d'étanchéification une voie d'écoulement d'un fluide, notamment d'un courant de gaz, qui s'écoule entre ces deux valves d'injection d'air (21, 22) et vers un orifice (2) de la buse de soufflage,
la première valve d'injection d'air (21) étant, selon une direction radiale (R) orthogonale à l'axe longitudinal (A), partiellement au moins agencée à l'intérieur de la deuxième valve d'injection d'air (22),
**caractérisé en ce que** les valves d'injection d'air (21,22, 23) présentent des sièges de valve (21b, 22b, 23b), les sièges de valve (21b, 22b, 23b) étant agencés à l'extrémité des valves d'injection d'air (21,22, 23) côté orifice de la buse de soufflage et de biais par rapport à l'axe longitudinal (A),
l'agencement des sièges de valve (21b, 22b, 23b) étant immédiatement adjacent à l'orifice (2) de la buse de soufflage,
les sièges de valve (21b, 22b, 23b) étant, dans une position dans laquelle les valves d'injection d'air (21, 22, 23) sont fermées, essentiellement agencés à la même hauteur par rapport à l'axe longitudinal (A).

2. Dispositif selon la revendication précédente,
la pluralité de valves d'injection d'air (21, 22, 23) comportant une troisième valve d'injection d'air (23) dont l'agencement est adjacent à la deuxième valve d'injection d'air (22),
la deuxième valve d'injection d'air (22) et la troisième valve d'injection d'air (23) étant de préférence agencées, partiellement au moins, l'une dans l'autre dans le sens radial (R), et/ou un joint d'étanchéification (25) de la barre d'étirage étant agencé entre la barre d'étirage (50) et la première valve d'injection d'air (21).

3. Dispositif selon l'une des revendications précédentes,
l'agencement des sièges de valve (21b, 22b, 23b) étant immédiatement adjacent à l'orifice (2) de la buse de soufflage avec un espacement entre le bord annulaire des sièges de valve (21b, 22b, 23b) le plus proche de l'orifice (2) de la buse de soufflage et l'orifice (2) de la buse de soufflage de moins de 120 mm, de préférence inférieur à 60 mm et de préférence particulière inférieur à 20 mm.

4. Dispositif selon l'une des revendications précédentes,
les valves d'injection d'air (21,22, 23) étant conformées de façon à ce que la surface projetée en direction de visée de l'axe longitudinal (A) de valves d'injection d'air voisines se chevauche au moins partiellement.

5. Dispositif selon l'une des revendications précédentes, comprenant
des moyens de commande (15a, b, c, d, e, f) au moyen desquels les différentes valves d'injection d'air (21,22, 23) peuvent respectivement être déplacées en direction axiale long de l'axe longitudinal (A),
chacune des valves d'injection d'air (21,22, 23) pouvant de préférence être commandée pneumatiquement.

6. Dispositif selon l'une des revendications précédentes, le dispositif présentant plusieurs conduites respectivement commandées par l'une des valves d'injection d'air (21, 22, 23),
le dispositif comprenant
- une conduite de pression de pré-soufflage (P1) pour la mise à disposition d'une pression de pré-soufflage, et/ou
- une conduite de pression de soufflage principal (P2) pour la mise à disposition d'une pression de soufflage principal, et/ou
- une conduite de pression intermédiaire (PB) pour la mise à disposition d'une pression intermédiaire, et/ou
- une conduite de purge (EXH) pour ventiler la zone de l'orifice (2) de la buse de soufflage et/ou
- une conduite vers un airbag pour la mise à disposition d'un système de retour de pression d'air.

7. Dispositif selon l'une des revendications précédentes,
la buse de soufflage (1) étant déplaçable en direction axiale le long de l'axe longitudinal (A) entre une position de soufflage dans laquelle l'orifice (2) de la buse de soufflage est appliqué de manière étanche contre une préforme (80) et/ou un moule de soufflage (70) qui maintient la préforme (80), et une position de repos dans laquelle l'orifice (2) de la buse de soufflage est agencé à une certaine distance d'une préforme (80).

8. Dispositif selon l'une des revendications précédentes, comprenant
- une voie d'écoulement (55a) dans la barre d'étirage pour le passage de l'air comprimé à travers la barre d'étirage (50), la voie d'écoulement (55a) s'étendant d'un premier orifice (58) de la barre d'étirage à travers le canal d'air comprimé (55) vers un deuxième orifice (52) de la barre d'étirage,
une valve (53) du canal d'air comprimé étant agencée à l'intérieur de la barre d'étirage (50) et pouvant être commandée pour passer d'une position ouverte dans laquelle la valve (53) du canal d'air comprimé libère la voie d'écoulement (55a) dans la barre d'étirage et une position fermée dans laquelle la valve (53) du canal d'air comprimé obture la voie d'écoulement (55a)

9. Dispositif selon l'une des revendications précédentes,
la barre d'étirage (50) présentant une section d'extrémité (51a) avec une pointe (51), le canal d'air comprimé (55) à l'intérieur de la barre d'étirage (50) s'étendant jusqu'à la section d'extrémité (51a) et de préférence jusqu'à la pointe (51) de la barre d'étirage,
le deuxième orifice (52) de la barre d'étirage étant agencé dans la zone de la section d'extrémité (51a) de la barre d'étirage et comportant de préférence plusieurs orifices de sortie (52b, 52c) latéraux réalisés dans la barre d'étirage (50),
la valve (53) du canal d'air comprimé étant de préférence agencée dans la zone de la section d'extrémité (51a) de la barre d'étirage et de préférence à proximité de la pointe (51) de la barre d'étirage.

10. Dispositif selon l'une des revendications précédentes, comprenant un poussoir de valve (56) agencé partiellement au moins à l'intérieur de la barre d'étirage (50) et notamment partiellement au moins à l'intérieur du canal d'air comprimé, le poussoir de valve (56) étant agencé et conçu pour déplacer la valve (53) du canal d'air comprimé entre la position ouverte et la position fermée, de préférence par un mouvement purement axial le long de l'axe longitudinal (A),
le poussoir de valve (56) comprenant de préférence une matière plastique renforcée par des fibres, notamment une matière plastique renforcée de fibres de carbone, ou étant constitué de ce matériau.

11. Dispositif selon l'une des revendications précédentes,
la valve (53) du canal d'air comprimé présentant un corps de valve (53a) et un siège de valve (53b), le corps de valve (53a) et le siège de valve (53b) étant agencés et conçus pour, en position fermée de la valve (53) du canal d'air comprimé, obturer la voie d'écoulement (55a) et, en position ouverte de la valve (53) du canal d'air comprimé, libérer la voie d'écoulement (55a), de préférence par un mouvement purement axial le long de l'axe longitudinal (A),
le corps de valve (53a) étant de préférence relié au poussoir de valve (56) et/ou le corps de valve (53a) présentant une symétrie de révolution par rapport à l'axe longitudinal (A).

12. Dispositif selon l'une des revendications précédentes,
le deuxième orifice de la barre d'étirage (52) étant, dans la zone de la section d'extrémité (51a) de la barre d'étirage, agencé de préférence à proximité de la pointe (51) de la barre d'étirage,
un régulateur de débit d'air comprimé (52a) étant agencé dans la voie d'écoulement (55a) entre la valve (53) du canal d'air comprimé et le deuxième orifice (52) de la barre d'étirage, ce régulateur étant de préférence agencé dans la zone de la section d'extrémité (51a) de la barre d'étirage, notamment à proximité de la pointe (51) de la barre d'étirage.

13. Dispositif selon l'une des revendications précédentes,
le régulateur (52a) de débit d'air comprimé comportant un alésage (52a) qui s'étend de préférence le long de l'axe longitudinal (A),
l'alésage (52a) présentant de préférence un diamètre d'au moins 2 mm, de préférence d'au moins 3 mm,
et l'alésage (52a) présentant de préférence un diamètre d'au plus 6 mm, de préférence d'au plus 5 mm.

14. Machine de soufflage-étirage (100) comprenant
- une roue de soufflage (120) avec plusieurs stations de soufflage (116), chacune des stations de soufflage (116) comprenant un dispositif selon l'une des revendications précédentes.

15. Procédé (300) de fabrication de récipients à partir de préformes thermiquement conditionnées notamment constituées d'un matériau thermoplastique, notamment de PET, comprenant les étapes suivantes :
- mise à disposition (310) d'un dispositif ou d'une machine de soufflage-étirage selon l'une des revendications précédentes,
- agencement (320) du bloc de valves (10) dans une position dans laquelle l'orifice (2) de la buse de soufflage est appliqué de manière étanche contre une préforme (80) et/ou contre un moule de soufflage (70) qui maintient la préforme (80),
- déplacement (330) de la première valve d'injection d'air (21) et/ou de la deuxième valve d'injection d'air (22) le long de l'axe longitudinal (A) pour libérer la voie d'écoulement d'un fluide entre les deux valves d'injection d'air (21,22) vers l'orifice (2) de la buse de soufflage, et de préférence application d'une pression (340) à l'intérieur de la préforme (80).
